# EUROPÄISCHE PATENTSCHRIFT

(11) **EP 4 341 975 B1**
(45) Veröffentlichungstag und Bekanntmachung des Hinweises auf die Patenterteilung: **09.12.2026**
(21) Anmeldenummer: 22741718.5
(22) Anmeldetag: 28.06.2022
(51) Int. Cl.: H01H 33/59, H01H 33/662, H02H 3/033

(54) **VAKUUMSCHALTRÖHRE UND ANORDNUNG MIT VAKUUMSCHALTRÖHREN SOWIE VERFAHREN ZUM ABSTEUERN VON VAKUUMSCHALTRÖHREN**
VACUUM INTERRUPTER, ASSEMBLY COMPRISING VACUUM INTERRUPTERS AND METHOD FOR CONTROLLING VACUUM INTERRUPTERS
INTERRUPTEUR À VIDE, ENSEMBLE D'INTERRUPTEURS À VIDE ET PROCÉDÉ DE COMANDE D'INTERRUPTEURS À VIDE

(30) Priorität: 23.07.2021 DE 102021207962
(43) Veröffentlichungstag der Anmeldung: 27.03.2024
(73) Patentinhaber: Siemens Energy Global GmbH & Co. KG, 81739 München (DE)
(72) Erfinder: BENKERT, Katrin, 90571 Schwaig (DE); GOEBELS, Tobias Alexander, 47661 Issum (DE); NIKOLIC, Paul Gregor, 91058 Erlangen (DE)
(86) Internationale Anmeldenummer: PCT/EP2022/067726
(87) Internationale Veröffentlichungsnummer: WO 2023/001505

(56) Entgegenhaltungen:
- WO-A1-2020/025407
- CN-A- 112 435 889
- DE-A1- 102009 031 598
- DE-A1- 102019 215 309

## Beschreibung

Die Erfindung betrifft eine Vakuumschaltröhre zum Schalten von Spannungen, mit wenigstens einer Hülle und mit wenigstens einem festen Kontakt sowie mit wenigstens einem beweglichen Kontakt. Weiterhin umfasst die Erfindung eine Anordnung mit zuvor beschriebenen Vakuumschaltröhren sowie ein Verfahren zum Absteuern von Vakuumschaltröhren.

Vakuumschaltröhren bzw. Vakuumschalter, welche Anordnungen von Vakuumschaltröhren umfassen, sind z. B. Leistungsschalter, bei denen relativ zueinander bewegbare Schaltkontakte in wenigstens einer Vakuumschaltkammer angeordnet sind.

Die Druckschrift US 4 010 338 A offenbart eine Vakuumschaltröhre, die dem Oberbegriff des Anspruchs 1 entspricht. Weitere Vakuumschaltröhren sind z. B. aus der WO 2020/025407 A1, der CN 112 435 889 A, der DE 10 2009 031598 A1 und der DE 10 2019 215309 A1 bekannt. In der Hochspannungstechnik werden derartige Vakuumschaltröhren zum Schalten von Spannungen im Hochspannungsbereich, insbesondere größer oder gleich 52 kV, und/oder zum Schalten großer Ströme im Bereich von bis zu einigen zehn Kiloampere verwendet. Vakuumschaltröhren, insbesondere umfasst von Anordnungen zum Schalten, sind wartungsarm, langlebig, und werden insbesondere über Federspeicheranriebe einfach und zuverlässig angetrieben. Für hohe Spannungsanforderungen werden z. B. Anordnungen mit mehreren Vakuumschaltröhren verwendet, deren Schaltstrecken elektrisch in Reihe geschaltet sind, wie z. B. aus der DE 10 2013 208 419 A1 bekannt ist. Alternativ werden z. B. Vakuumschaltröhren mit mehreren Schaltstrecken insbesondere in einer Vakuumschaltröhre verwendet.

Im Fall von mehreren Vakuumschaltröhren wird, bei geöffneten Schaltstrecken der Vakuumschaltröhren, eine den Vakuumschaltröhren angepasste Spannungsaufteilung auf die Vakuumschaltröhren angestrebt, d. h. Absteuerung, um eine Überlastung einzelner Vakuumschaltröhren zu vermeiden. Im Fall von Vakuumschaltröhren mit mehreren Schaltstrecken in insbesondere einer Vakuumschaltröhre wird, bei geöffneten Schaltstrecken der Vakuumschaltröhre, eine den Schaltstrecken angepasste Spannungsaufteilung bzw. Absteuerung angestrebt, um eine Überlastung zu vermeiden. Beispielsweise wird bei mehreren gleichartig ausgebildeten, hintereinander geschalteten Vakuumschaltröhren bzw. Schaltstrecken, eine möglichst gleichmäßige Spannungsaufteilung auf die Vakuumschaltröhren respektive Schaltstrecken angestrebt.

Um eine angestrebte Spannungsaufteilung auf die Vakuumschaltröhren bzw. Schaltstrecken zu erreichen, werden beispielsweise passive elektrische Bauelemente wie z. B. ein Steuerwiderstand parallel zu einer Vakuumschaltröhre geschaltet. Diese Bauelemente vergrößern jedoch den für einen Vakuumschalter mit einer Vakuumschaltröhre bzw. für eine Anordnung mit mehreren Vakuumschaltröhren benötigten Bauraum. Insbesondere bei einem Vakuumschalter mit gereinigter und entfeuchteter Druckluft, d. h. Clean Air als die Vakuumschaltröhre umgebendes Isoliergas, sind relativ große Isolationsabstände zwischen einer Vakuumschaltröhre und einem passivem elektrischen Bauelement sowie zwischen einem passivem elektrischen Bauelement und einem insbesondere metallischen Schaltergehäuse der Anordnung von einer oder mehr Vakuumschaltröhren notwendig, da die Druckluft eine relativ geringe elektrische Durchschlagfestigkeit im Vergleich zu anderen Isoliergasen, wie z. B. Schwefelhexafluorid, aufweist. Um eine ausreichende Isolation zwischen den Vakuumschaltröhren und Schaltungen mit passiven Bauelementen zu erreichen, ist z. B. die Anordnung der Vakuumschaltröhren und verschalteten passiven Bauelemente in unterschiedlichen Gehäusen möglich. Diese Anordnungen sind jedoch mit einem hohen Platzbedarf und hohen Kosten verbunden. Eine spezifische Spannungsaufteilung über einzelne Elemente einer Vakuumschaltröhre hinweg ist mit einem derartigen Aufbau nicht möglich.

Der Erfindung liegt die Aufgabe zugrunde, eine Spannungssteuerung an einer Vakuumschaltröhre und/oder einer Anordnung mit mehreren Vakuumschaltröhren, mit geringem Platzbedarf zu ermöglichen, und/oder ein Verfahren zum Absteuern von Vakuumschaltröhren mit geringem Platzbedarf anzugeben, insbesondere mit einer spezifischen, vorbestimmten Spannungsaufteilung über einzelne Elemente einer oder mehrerer Vakuumschaltröhren hinweg.

Die Aufgabe wird erfindungsgemäß durch eine Vakuumschaltröhre zum Schalten von Spannungen mit den Merkmalen des Anspruchs 1, einer Anordnung mit zuvor beschriebenen Vakuumschaltröhren gemäß Anspruch 10, und einem Verfahren zum Absteuern von zuvor beschriebenen Vakuumschaltröhren, gemäß Anspruch 12 gelöst. Vorteilhafte Ausgestaltungen der erfindungsgemäßen Vakuumschaltröhre zum Schalten von Spannungen und/oder der erfindungsgemäßen Anordnung mit zuvor beschriebenen Vakuumschaltröhren, sind in den Unteransprüchen angegeben. Dabei sind Gegenstände des Hauptanspruchs mit Merkmalen von Unteransprüchen und Merkmale der Unteransprüche untereinander kombinierbar.

Eine erfindungsgemäße Vakuumschaltröhre zum Schalten von Spannungen umfasst wenigstens eine Hülle und wenigstens einen festen Kontakt sowie wenigstens einen beweglichen Kontakt. Des Weiteren umfasst die Vakuumschaltröhre Steuerelemente, welche an der wenigstens einen Vakuumschaltröhre angeordnet sind. Insbesondere sind die Steuerelemente mit der Vakuumschaltröhre in einem gemeinsamen Gehäuse anordenbar, und nicht in einem getrennten Gehäuse von der Vakuumschaltröhre angeordnet.

Die Steuerelemente ermöglichen eine definierte, vorbestimmte Spannungsverteilung über die Vakuumschaltröhre hinweg bei geöffnetem elektrischem Kontakt, d. h. beabstandeten Kontakten der Vakuumschaltröhre. Insbesondere eine gleichmäßige Spannungsverteilung über die Vakuumschaltröhre hinweg ist möglich, womit Beschädigungen durch Überspannungen vermieden werden können und eine langzeitstabile, zuverlässige Funktion der Vakuumschaltröhre sichergestellt werden kann. Die Anordnung der Steuerelemente an der wenigstens einen Vakuumschaltröhre ermöglicht eine kompakte, platzsparende, kostengünstige Anordnung der Steuerelemente und der wenigstens einen Vakuumschaltröhre, insbesondere in einem gemeinsamen Gehäuse, welches z. B. mit Clean Air befüllt ist, mit verringerter Gefahr von elektrischen Überschlägen. Ein kompakter Aufbau ermöglicht eine Materialersparnis, insbesondere eine geringe Gehäusegröße, verringert Kosten, und ermöglicht die Verwendung von alternativen Schaltgasen wie Clean Air in kompakten Anordnungen, und macht einen einfachen, umweltfreundlichen Einsatz der Vakuumschaltröhren möglich.

Die Vakuumschaltröhre umfasst Steuerelemente unterschiedlicher Länge und/oder unterschiedlicher Breite. Eine Länge ist z. B. im Bereich von 10 bis 100 Millimetern, eine zweite Länge ist z. B. im Bereich von 20 bis 200 Millimetern, und/oder eine dritte Länge ist z. B. im Bereich von 30 bis 300 Millimetern. Die Breite der Steuerelemente liegt z. B. im Bereich von 10 bis 80 Millimetern. Damit sind unterschiedliche Schaltungen der Steuerelemente mit verschiedenen Werten wie z. B. Kapazität und/oder Ohm'schen Widerstand möglich, welche vordefinierte, gewünschte Spannungsverteilungen über Bereiche der Vakuumschaltröhre hinweg ermöglichen.

Die Steuerelemente umfassen wenigstens einen Kondensator und/oder wenigstens einen Widerstand, und/oder wenigstens ein Steuerelement ist ein Kondensator und/oder ein Widerstand, und/oder alle Steuerelemente können aus Kondensatoren und/oder Widerständen bestehen. Steuerelemente bestehen aus Kondensatoren mit unterschiedlicher Breite und/oder Länge und/oder aus Widerständen mit unterschiedlicher Breite und/oder Länge, aus Kondensatoren mit unterschiedlichen Kapazitäts-Werten und/oder aus Widerständen mit unterschiedlichen Ohm'schen Widerstands-Werten. Die unterschiedlichen Werte können z. B. auch durch Verwendung von unterschiedlichen Materialien, insbesondere unterschiedlich dotierten Materialien erzeugt werden. Damit sind die zuvor beschriebenen Vorteile verbunden bzw. einfach ermöglichbar. Steuerelemente sind z. B. aus einem Keramik-Polymer-Komposit-Werkstoff und/oder können einen Keramik-Polymer-Komposit-Werkstoff umfassen, insbesondere in einer Gießharzmatrix. Keramik-Polymer-Komposit-Werkstoffe, insbesondere in einer Gießharzmatrix, sind gut geeignet zur Herstellung von kompakten, kostengünstigen Kondensatoren und/oder Widerständen in unterschiedlichen Formen.

Die Vakuumschaltröhre kann eine Hülle mit wenigstens einem Hauptschirm und mit wenigstens zwei Keramiksegmenten umfassen, wobei der wenigstens eine Hauptschirm zwischen den wenigstens zwei Keramiksegmenten angeordnet sein kann, und/oder die Steuerelemente können an der Hülle der Vakuumschaltröhre angeordnet sein, insbesondere an den Keramiksegmenten der Hülle, insbesondere in unmittelbarer Umgebung und/oder direkt stoffschlüssig anliegend an den Keramiksegmenten. Dadurch wird ein platz- bzw. raumsparender Aufbau ermöglicht, mit den zuvor beschriebenen Vorteilen, und eine erhöhte elektrische Überschlagsfestigkeit durch die elektrisch isolierenden Eigenschaften von Keramiksegmenten.

Die Keramiksegmente können insbesondere durch Dampfschirme, welche insbesondere vom Inneren der Vakuumschaltröhre in den Außenbereich der Vakuumschaltröhre ragen, in Keramiksegment-Elemente unterteilt sein. Wenigstens ein Steuerelement kann mehr als ein Keramiksegment-Element längenmäßig überragen und/oder im Wesentlichen die Länge von zwei oder mehr Keramiksegment-Elementen aufweisen. Dadurch sind Steuerelemente mit unterschiedlichen Werten, z. B. Kapazitäten und/oder Ohm'schen Widerständen realisierbar, mit einer Verschaltung von Steuerelementen über die Dampfschirme, welche z. B. aus Kupfer und/oder Stahl bestehen. Eine Schaltung zur Absteuerung bzw. Spannungsverteilung über die Vakuumschaltröhre im Zustand mit geöffnetem elektrischem Kontakt bzw. Kontakten, welche beabstandet sind, mit unterschiedlichen Werten der Steuerelemente und über die Dampfschirme beliebig, d. h. definiert verschaltbar, ist derart einfach und kostengünstig möglich. Überspannungen an einzelnen Keramiksegmenten und/oder Keramiksegment-Elementen können verhindert werden, womit die Lebensdauer der Vakuumschaltröhre erhöht wird und eine langzeitstabile Funktion ermöglicht wird, insbesondere ohne Störungen bis hin zu Zerstörungen durch Überspannungen an Keramiksegmenten.

Wenigstens zwei Steuerelemente können umfasst sein, insbesondere drei oder mehr Steuerelemente, welche kreisförmig am Umfang der wenigstens einen Vakuumschaltröhre angeordnet sind, insbesondere kreisförmig am Umfang wenigstens eines Keramiksegment-Elements. Eine kreisförmige bzw. ringförmige Anordnung der Steuerelemente an Keramiksegmenten und/oder Keramiksegment-Elementen ermöglicht eine kompakte, platzsparende Anordnung der Steuerelemente und eine einfache, kostengünstige Verschaltung der Steuerelemente, insbesondere über die Dampfschirme, mit den zuvor beschriebenen Vorteilen.

Die Steuerelemente können kreisförmig am Umfang der wenigstens einen Vakuumschaltröhre angeordnet sein, mit jeweils Steuerelementen an verschiedenen Keramiksegment-Elementen, wobei einzelne Steuerelemente an genau einem Keramiksegment-Element angeordnet sein können, und/oder einzelne Steuerelemente an zwei, und/oder einzelne Steuerelemente an mehr als zwei Keramiksegment-Elementen angeordnet sein können. Damit sind Schaltungen mit Steuerelementen unterschiedlicher Werte möglich, insbesondere unterschiedlicher Kapazitäts- und/oder Ohm'scher Widerstands-Werte, wobei Steuerelemente mit gleicher Länge und Breite z. B. gleiche Werte aufweisen, und durch Verlängerung über zwei oder mehr Keramiksegment-Elemente hinweg, kleinere, z. B. bei Kapazitäten, und/oder größere Werte, z. B. bei Widerständen, aufweisen können, und eine Parallelschaltung gleich langer Steuerelemente über eine elektrische Verschaltung über gleiche insbesondere Dampfschirme erfolgen kann, und eine Reihenschaltung über unterschiedliche, hintereinander liegende insbesondere Dampfschirme erfolgen kann. Eine Parallelschaltung von in Reihe verschalteten Steuerelementen mit Keramiksegment-Elementen, welche verlängert sind und über mehrere Keramiksegment-Elemente hinweg ragen bzw. angeordnet sind, ist einfach möglich. Derart sind beliebige Schaltungen von Steuerelementen mit unterschiedlichen Werten von Steuerelementen einfach und kostengünstig sowie platzsparend möglich. Gewünschte, vordefinierte Absteuerungen bzw. Spannungsverteilungen über die Vakuumschaltröhre sind somit realisierbar, mit den zuvor beschriebenen Vorteilen.

Steuerelemente können zwischen dem wenigstens einem festen Kontakt und dem wenigstens einem beweglichen Kontakt elektrisch und/oder räumlich angeordnet sein, insbesondere zwischen dem wenigstens einem festen Kontakt und einem Dampfschirm, und/oder zwischen wenigstens einem festen Kontakt und einem Hauptschirm, und/oder zwischen einem Dampfschirm und einem Hauptschirm, und/oder zwischen zwei Dampfschirmen, und/oder zwischen dem wenigstens einem beweglichen Kontakt und einem Dampfschirm, und/oder zwischen wenigstens einem beweglichen Kontakt und einem Hauptschirm.

Die Anordnung der Steuerelemente am Umfang der Vakuumschaltröhre, zwischen den Kontakten, Dampfschirmen und/oder Hauptschirm, ermöglicht eine platzsparende, kompakte Anordnung, eine einfache elektrische Kontaktierung, z. B. eine gleichmäßige Feldverteilung bei gleichmäßiger Anordnung um den Umfang der Vakuumschaltröhre herum, und/oder eine beliebige, vorbestimmte Verschaltung, und insbesondere eine z. B. gleichmäßige, diskrete Aufteilung der Kapazitäten und/oder Ohm'schen Widerstände zwischen den Kontakten, Dampfschirmen und/oder Hauptschirm. Damit ist eine diskrete Aufteilung der Kapazitäten und/oder Ohm'schen Widerstände entlang der Längsachse und/oder entlang des Umfangs der Vakuumschaltröhre möglich, und eine gezielte bzw. definierte Absteuerung bzw. Spannungsaufteilung entlang der Längsachse und/oder entlang des Umfangs der Vakuumschaltröhre, mit den zuvor beschriebenen Vorteilen.

Die Steuerelemente können eine Gesamtkapazität im Bereich von 10 bis 4000 pF, insbesondere im Bereich 500 bis 4000 pF aufweisen. Diese Werte ermöglichen eine gezielte bzw. definierte Absteuerung bzw. Spannungsaufteilung entlang der Längsachse und/oder entlang des Umfangs der Vakuumschaltröhre, mit einem Gesamtwert insbesondere für eine Absteuerung bei Hochspannungen im Bereich größer oder gleich 52 kV. Die Vakuumschaltröhre kann ausgebildet sein, Spannungen im Hochspannungsbereich, insbesondere im Bereich größer oder gleich 52 kV zu schalten.

Bei einer erfindungsgemäßen Anordnung mit zuvor beschriebenen Vakuumschaltröhren können wenigstens zwei, insbesondere mehr als zwei Vakuumschaltröhren elektrisch in Reihe geschaltet sein, insbesondere mit Steuerelementen, welche an den wenigstens zwei Vakuumschaltröhren angeordnet sein können, und/oder mit Steuerelementen einer Vakuumschaltröhre in Reihe geschaltet mit Steuerelementen einer weiteren Vakuumschaltröhre, insbesondere aller Vakuumschaltröhren.

Das Schalten hoher Spannungsebenen, insbesondere von Hochspannungen im Bereich größer oder gleich 52 kV, kann derart mit kostengünstigen, erhältlichen Vakuumschaltröhren erfolgen. Eine Absteuerung wie zuvor beschrieben, mit Steuerelementen jeweils entlang des Umfangs und/oder der Längsachse der Vakuumschaltröhren, ermöglicht eine Spannungsaufteilung auf die Vakuumschaltröhren und gezielte Absteuerung der einzelnen Vakuumschaltröhren bzw. Vakuumschaltröhren-Elemente, welche in Reihe hintereinandergeschaltet sind. Damit sind die zuvor beschriebenen Vorteile, insbesondere bei kostengünstigem, einfachem, platzsparendem, kompaktem Aufbau bzw. Anordnung, erreichbar.

Ein Metalltank- und/oder ein Isolator-Gehäuse können umfasst sein, in welchem die Vakuumschaltröhren angeordnet sein können, insbesondere befüllt mit Clean Air als Isoliergas.

Die kompakte Anordnung der Steuerelemente entlang des Umfangs und/oder der Längsachse an der Vakuumschaltröhre ermöglicht ein kompaktes Metalltank- und/oder ein Isolator-Gehäuse, mit geringem Material- und Kostenaufwand, verringert die Gefahr von elektrischen Überschlägen, reduziert das Isoliergasvolumen und/oder ermöglicht die Verwendung von klimafreundlichen bzw. klimaneutralen Isoliergasen wie z. B. Clean Air in kompakten, z. B. kostengünstig erhältlichen Standard-Gehäusen.

Bei einem erfindungsgemäßen Verfahren zum Absteuern von Vakuumschaltröhren, insbesondere von zuvor beschriebenen Vakuumschaltröhren und/oder von zuvor beschriebenen Anordnungen mit Vakuumschaltröhren, erfolgt ein elektrisches Absteuern mittels Steuerelementen, insbesondere mittels Kondensatoren und/oder Widerständen, welche an den Vakuumschaltröhren angeordnet sind, insbesondere in einem Gehäuse mit den Vakuumschaltröhren, und/oder mit Steuerelementen unterschiedlicher Vakuumschaltröhren, welche in Reihe geschaltet sind.

Die Vorteile des erfindungsgemäßen Verfahrens zum Absteuern von Vakuumschaltröhren, insbesondere von zuvor beschriebenen Vakuumschaltröhren und/oder von zuvor beschriebenen Anordnungen mit Vakuumschaltröhren, gemäß Anspruch 13, und die Vorteile der erfindungsgemäßen Anordnung mit zuvor beschriebenen Vakuumschaltröhren gemäß Anspruch 11, sind analog den zuvor beschriebenen Vorteilen der erfindungsgemäßen Vakuumschaltröhre zum Schalten von Spannungen gemäß Anspruch 1 und umgekehrt.

Im Folgenden werden Ausführungsbeispiele der Erfindung schematisch in den Figuren dargestellt und nachfolgend näher beschrieben.

Dabei zeigen die
- Figur 1: schematisch eine erfindungsgemäße Vakuumschaltröhre 1 zum Schalten von Spannungen in Schrägansicht von der Seite, mit Steuerelementen 8, 9 unterschiedlicher Länge, an einer Hülle 2 der Vakuumschaltröhre angeordnet, und
- Figur 2: schematisch eine erfindungsgemäße Vakuumschaltröhre 1 analog der Vakuumschaltröhre 1 der Figur 1, mit Steuerelementen 8, 9, 10, welche beispielhaft drei verschiedene Längen aufweisen, elektrisch kontaktiert und verschaltet zwischen den Kontakten 3, **4** über Dampfschirme 7 und einem Hauptschirm 5, und
- Figur 3: eine erfindungsgemäße Anordnung 16 von zwei in Reihe geschalteten Vakuumschaltröhren 1 der Figur 2, mit schematisch dargestellter Verschaltung der Steuerelemente 8, 9, 10 jeweils pro Vakuumschaltröhre 1 zwischen den Kontakten 3, 4 über Dampfschirme 7 und den Hauptschirmen 5 verschaltet, und
- Figur 4: eine erfindungsgemäße Anordnung 16 von zwei in Reihe geschalteten Vakuumschaltröhren 1 analog Figur 3, welche von einem Gehäuse 14 umfasst sind, das z. B. mit Clean Air als Isoliergas 15 befüllt ist, und
- Figur 5: eine schematische Darstellung einer Spannungsaufteilung des an ein Keramiksegment 6 einer Vakuumschaltröhre 1, unterteilt durch Dampfschirme 7 mit Dampfschirmpotentialen 17 und 18 in Keramiksegment-Elemente 11, angelegtem elektrischem Potentials U_{ges} über unterschiedliche, verschaltete Kondensatoren als Steuerelemente 8, 9, und
- Figur 6: einen normierten Potentialverlauf U abhängig von der Zeit t für ein erstes Dampfschirmpotential 17, ein zweites Dampfschirmpotential 18 und ein Kammerpotential 19.

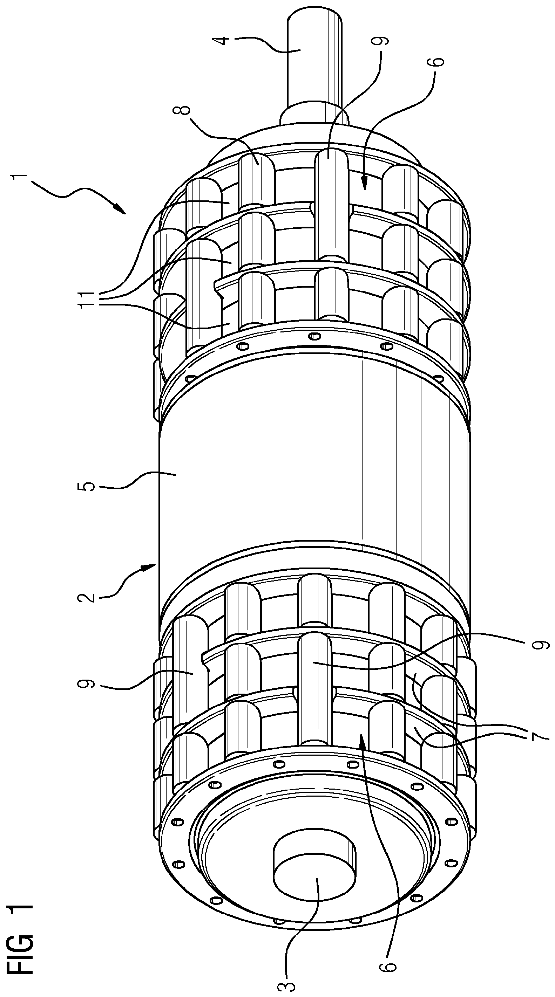

In Figur 1 ist schematisch eine erfindungsgemäße Vakuumschaltröhre 1 zum Schalten von Spannungen, insbesondere von Hochspannungen im Bereich größer/gleich 52 kV, in Schrägansicht von einer Seite beispielhaft dargestellt. Die Vakuumschaltröhre 1 weist eine Hülle 2 auf, welche unter anderem einen mittigen Hauptschirm 5 und jeweils ein sich rechts und links bündig anschließendes Keramiksegment 6 umfasst. Der Hauptschirm 5 und die Keramiksegmente 6 sind hohlzylinderförmig bzw. rohrförmig ausgebildet, und an den Enden der Vakuumschaltröhre 1 jeweils fluiddicht verschlossen. Im Inneren ist die Vakuumschaltröhre 1 evakuiert bzw. herrscht ein Vakuum. Von den Enden der Vakuumschaltröhre 1 her ragen Kontakte 3 und 4 in die Hülle 2 der Vakuumschaltröhre 1 hinein, z. B. ein fester Kontakt 3 von einer Seite bzw. Grundfläche des Zylinders her und ein beweglicher Kontakt 4 von der anderen Seite bzw. Deckfläche des Zylinders, d. h. der Vakuumschaltröhre 1 her.

Der Hauptschirm 5 ist z. B. aus einem Metall, insbesondere Kupfer und/oder Stahl, und umfasst z. B. im Inneren Bedampfungsschirme, welche der Einfachheit halber in den Figuren nicht dargestellt sind. Die hohlzylinderförmigen Keramiksegmente 6 sind z. B. aus gesinterter Keramik hergestellt und insbesondere oberflächenbehandelt. Die Keramiksegmente 6 umfassen z. B. Keramiksegment-Elemente 11, welche über Dampfschirme 7 miteinander verbunden sind. Dabei erfolgt eine Verbindung z. B. bei einem Lötvorgang in einem Ofen bei einigen hundert Grad Celsius, bei der Herstellung der Vakuumschaltröhre 1. Die Dampfschirme 7 sind z. B. aus Metall, insbesondere Kupfer und/oder Stahl, und ringförmig ausgebildet. Im Inneren der Vakuumschaltröhre 1 umfassen die Dampfschirme 7 z. B. Bedampfungsschirme, welche der Einfachheit halber in den Figuren nicht dargestellt sind. Nach Außen gezogen ragen die Dampfschirme 7 z. B. in Form flacher Ringe aus der Vakuumschaltröhre 1 heraus bzw. über den Keramiksegment-Element 11 Umfang hinaus. Die Dampfschirme 7 unterteilen ein jeweiliges Keramiksegment 6 in Keramiksegment-Elemente 11.

Die Kontakte 3 und 4 sind z. B. aus Kupfer und/oder Stahl, und insbesondere bolzenförmig, mit z. B. geschlitzten, tellerförmigen Enden im Inneren der Vakuumschaltröhre 1 ausgebildet. Der feste Kontakt 3 ist fluiddicht mit einem deckelförmigen Verschluss auf einem Ende der Vakuumschaltröhre 1 verbunden, wobei der Verschluss z. B. aus einem Metall, insbesondere Kupfer und/oder Stahl hergestellt ist. Der bewegliche Kontakt 4 ist fluiddicht mit einem deckelförmigen Verschluss auf dem anderen Ende der Vakuumschaltröhre 1 verbunden, z. B. über einen Faltenbalg beweglich gelagert, was der Einfachheit halber in der Figur 1 nicht dargestellt ist, wobei der Verschluss z. B. aus einem Metall, insbesondere Kupfer oder Stahl hergestellt ist.

Über die nach Außen geführten Bolzen des festen Kontakts 3 und des beweglichen Kontakts 4, ist die Vakuumschaltröhre elektrisch kontaktierbar. Der bewegliche Kontakt 4 ermöglicht ein elektrisches Schalten durch Bewegung zum festen Kontakt 3 hin, d. h. zum Schließen eines Spalts zwischen den tellerförmigen Kontakte-Enden der Kontakte 3 und 4, beim Einschalten, und durch Bewegung vom festen Kontakt 3 weg, d. h. zum Erzeugen eines Spalts zwischen den tellerförmigen Kontakte-Enden der Kontakte 3 und 4, beim Ausschalten. Der erzeugte Spalt zwischen den Kontakte-Enden der Kontakte 3 und 4 sowie die Kontakte-Enden selbst, sind im evakuierten Inneren der Vakuumschaltröhre 1 angeordnet, womit ein Spalt im Bereich von Millimetern bis hin zu Zentimetern zum Ausschalten insbesondere von Hochspannungen ausreicht. Die Vakuumschaltröhre 1 hat z. B. eine Länge im Bereich von insbesondere 30 bis 100 Zentimetern, und einen Umfang im Bereich von insbesondere 10 bis 100 Zentimetern.

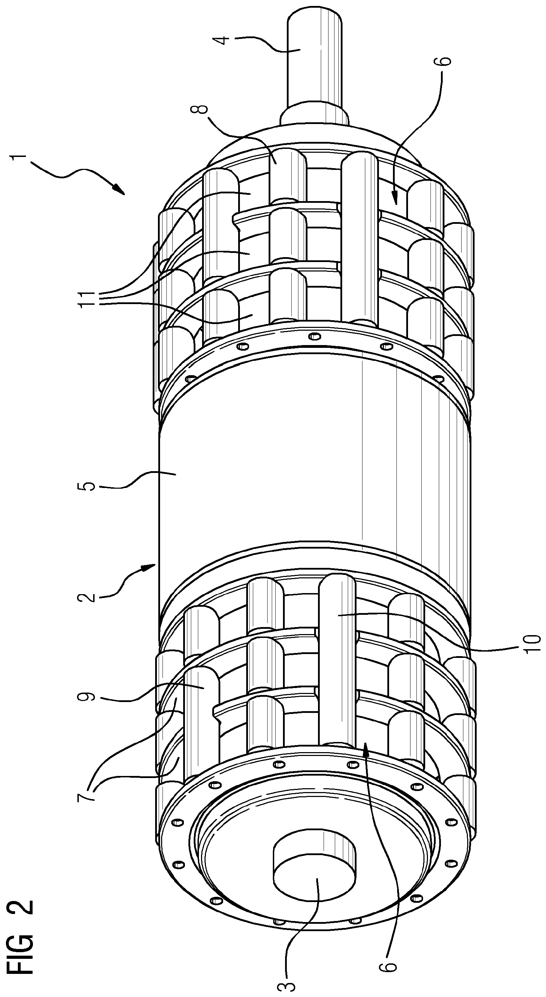

Erfindungsgemäß sind um den Umfang der Vakuumschaltröhre 1 Steuerelemente 8, 9, 10 an einer Hülle 2 der Vakuumschaltröhre 1 angeordnet, wie in den Figuren 1 und 2 dargestellt ist. Steuerelemente 8, 9, 10 sind z. B. Kondensatoren und/oder Widerstande. Kondensatoren sind insbesondere keramische Kondensatoren, z. B. mit Werten der Kapazität einzelner Kondensatoren im Bereich von 10 bis 4000 pF. Damit ergibt sich eine Gesamtkapazität der Anordnung z. B. im Bereich von 10 bis 4000 pF. Widerstände sind insbesondere Ohm'sche Widerstände, z. B. mit Werten einzelner Widerstände im Bereich von wenigen Ohm bis hin zu einigen hundert, oder einigen tausend, oder einigen zehntausend Ohm, oder einigen hunderttausend Ohm. Damit ergibt sich ein Gesamtwiderstand im Bereich von wenigen Ohm bis hin zu einigen hundert Ohm, einigen tausend Ohm, einigen zehntausend Ohm oder einigen hunderttausend Ohm.

Die Steuerelemente 8, 9, 10 weisen z. B. eine zylindrische, rechteckige und/oder elliptische Form auf. Andere Formen, welche z. B. eine platzsparende Anordnung erlauben, z. B. mit konvexen und/oder konkaven Oberflächen, sind ebenfalls möglich. Eine Anordnung der Steuerelemente 8, 9, 10 um den Umfang der Hülle 2 der Vakuumschaltröhre 1 erfolgt z. B. kreisförmig entlang des Querschnitts des Umfangs. Steuerelemente 8, 9, 10 sind z. B. unterschiedlich lang und/oder breit ausgebildet, zur Realisierung von Steuerelementen 8, 9, 10 mit unterschiedlichen Werten z. B. der Kapazität und/oder des Ohm'schen Widerstands. Die Länge l liegt z. B. im Bereich von 10 bis 100 Millimetern, im Bereich von 20 bis 200 Millimetern, und/oder im Bereich von 30 bis 300 Millimetern. Die Breite liegt z. B. im Bereich von 10 bis 80 Millimetern. In Figur 1 sind Steuerelemente 8 mit einer Länge gleich der Länge eines Keramiksegment-Elements 11 parallel zur Längsachse der Vakuumschaltröhre 1 angeordnet, dargestellt, welche im Weiteren als kurze Steuerelemente 8 bezeichnet werden. Die Steuerelemente 8 eines Keramiksegment-Elements 11 sind insbesondere parallel zueinander verschaltet und, über entlang der Längsachse der Vakuumröhre 1 aufeinanderfolgende Dampfschirme 7, miteinander elektrisch verbunden bzw. verschaltet. Die kurzen Steuerelemente 8 sind z. B. mit regelmäßigen und/oder gleichen Abständen voneinander entlang des Umfangs eines jeweiligen Keramiksegment-Elements 11 und/oder eines kreisförmigen Querschnittes der Vakuumschaltröhre 1 angeordnet, und parallel verschaltet. Entlang der Längsachse der Vakuumschaltröhre 1, in Reihe elektrisch verschaltet sind Steuerelemente 8, angeordnet an unterschiedlichen Keramiksegment-Elementen 11 und/oder Keramiksegmenten 6 und/oder Vakuumschaltröhren 1, wie in folgenden Ausführungsbeispielen näher erläutert wird.

Steuerelemente 9 mit einer Länge gleich der Länge zweier Keramiksegment-Elemente 11 sind parallel zur Längsachse der Vakuumschaltröhre 1 angeordnet und im Weiteren als mittellange Steuerelemente 9 bezeichnet. Die Steuerelemente 9 sind mit Steuerelementen 8, 9 der gleichen zwei Keramiksegment-Elemente 11 parallel zueinander verschaltet, wobei zwei in Reihe geschaltete Steuerelemente 8 jeweils parallel zu Steuerelementen 9 geschaltet sind, und über entlang der Längsachse der Vakuumröhre 1 aufeinanderfolgende drei Dampfschirme 7 die Verschaltung bzw. elektrische Verbindung erfolgt, wobei an Stellen der Steuerelemente 9 der mittlere Dampfschirm 7 eine Ausnehmung bzw. Vertiefung aufweist, und nicht elektrisch mit den Steuerelementen 9 verbunden ist. Die kurzen und mittellangen Steuerelemente 8, 9 sind z. B. mit regelmäßigen und/oder gleichen Abständen voneinander entlang des Umfangs eines jeweiligen Keramiksegment-Elements 11 und/oder zweier Keramiksegment-Elemente 11 bzw. eines kreisförmigen Querschnittes der Vakuumschaltröhre 1 angeordnet, für eine parallele Verschaltung mit den Steuerelementen 9. Entlang der Längsachse der Vakuumschaltröhre 1, in Reihe elektrisch verschaltet sind Steuerelemente 8, 9 angeordnet an unterschiedlichen Keramiksegment-Elementen 11, bzw. für Steuerelemente 9 an unterschiedlichen Keramiksegment-Element-Paaren, und/oder Keramiksegmenten 6 und/oder Vakuumschaltröhren 1, wie in folgenden Ausführungsbeispielen ebenfalls näher erläutert wird.

Wie in Figur 2 beispielhaft dargestellt ist, sind auch Steuerelemente 8, 9, 10 mit drei unterschiedlichen Längen verwendbar, oder mit mehr Längenunterschieden, was der Einfachheit halber in den Figuren nicht dargestellt ist. In Figur 2 sind zusätzlich Steuerelemente 10 mit einer Länge gleich der Länge dreier Keramiksegment-Elemente 11 dargestellt, welche im Weiteren als lange Steuerelemente 10 bezeichnet werden. Eine Anordnung und Verschaltung erfolgt analog den kurzen und mittellangen Steuerelementen 8, 9, parallel zur Längsachse der Vakuumschaltröhre 1 angeordnet und verschaltet, und entlang der Längsrichtung der Vakuumschaltröhre in Reihenschaltung und entlang eines Querschnitts der Vakuumschaltröhre in Parallelschaltung. Es sind weitere Möglichkeiten der Anordnung und Längen möglich, z. B. eine Anordnung entlang Schraubenlinien und/oder schräg sowie die Verwendung von Steuerelementen 8, 9, 10 mit unterschiedlichen Breiten um unterschiedliche Werte z. B. der Kapazität und/oder des Ohm'schen Widerstands zu realisieren, was der Einfachheit halber in den Figuren nicht dargestellt ist.

Wie in den Figuren 1 und 2 dargestellt ist, sind die Steuerelemente 8, 9, 10 z. B. entlang des Umfangs der Hülle 2 der Vakuumschaltröhre 1 elektrisch und räumlich angeordnet beabstandet auf einem kreisförmigen Querschnitt des Umfangs der Vakuumschaltröhre 1, entlang der Längsachse der Vakuumschaltröhre 1 zwischen dem festen Kontakt 3 und dem beweglichen Kontakt 4, insbesondere zwischen dem festen Kontakt 3 und einem Dampfschirm 7, zwischen benachbarten Dampfschirmen 7, zwischen einem Dampfschirm 7 und dem Hauptschirm 5, zwischen dem Hauptschirm 5 und einem Dampfschirm 7, zwischen benachbarten Dampfschirmen 7, zwischen einem Dampfschirm 7 und dem beweglichen Kontakt 4, insbesondere symmetrisch angeordnet. Dabei dienen die Dampfschirme 7 und der Hauptschirm 5 der gut elektrisch leitenden Kontaktierung der Steuerelemente 8, 9, 10 untereinander und zwischen bzw. mit den Kontakten 5 und 6, z. B. über die deckelförmigen Verschlüsse an den Enden der Vakuumschaltröhre 1, und insbesondere beim beweglichen Kontakt 4 über den Faltenbalg. An Stellen von Steuerelementen 9, 10, welche über Dampfschirme 7 hinausragen bzw. mehrere Keramiksegment-Elemente 11, welche durch den Dampfschirm 7 bzw. die Dampfschirme 7 verbunden sind, überstreichen bzw. überdecken, sind im Dampfschirm 7 bzw. den jeweiligen Dampfschirmen 7 z. B. Ausnehmungen und/oder Vertiefungen angeordnet, um einen elektrischen Kontakt der jeweiligen Dampfschirme 7 mit den jeweiligen überragenden Steuerelementen 9, 10 zu verhindern.

Dampfschirme 7 sind z. B. aus einem Metall, insbesondere Kupfer und/oder Stahl, und können Keramiksegmente 6 unterteilen über insbesondere Bedampfungsschirme, welche in die Vakuumschaltröhre 1 hineinragen. Eine Verbindung der Elemente der Vakuumschaltröhre 1, wie z. B. von Keramiksegmenten 6, Hauptschirm 5, Dampfschirmen 7, deckelförmigen Verschlüssen, und/oder mit Steuerelementen 8, 9, 10, erfolgt z. B. durch Verlöten und/oder leitfähiges Kleben. Eine Anordnung der Steuerelemente 8, 9, 10 an der Vakuumschaltröhre 1 bzw. der Hülle 2 der Vakuumschaltröhre 1, umfasst einen stoffschlüssigen mechanischen Kontakt mit der Hülle 2 und/oder einen geringen Abstand im Bereich von Millimetern, wobei ein direkter Kontakt der Steuerelemente 8, 9, 10 mit der Hülle z. B. über die Dampfschirme 7, den Hauptschirm 5 und/oder den deckelförmigen Verschlüssen erfolgen kann.

Steuerelemente 8, 9, 10 zwischen unterschiedlichen Dampfschirmen 7 kontaktiert, sind z. B. entlang der Längsachse der Vakuumschaltröhre 1 auf parallelen der Längsachse, auf insbesondere geraden oder gekrümmten Linien angeordnet, oder jeweils versetzt zueinander angeordnet. Die Anordnung der Steuerelemente 8, 9, 10 auf dem Umfang der Vakuumschaltröhre 1 ergibt z. B. regelmäßige oder unregelmäßige Muster. Eine Anordnung der Steuerelemente 8, 9, 10 auf dem Umfang der Vakuumschaltröhre 1 bzw. deren Hülle 2 ist platzsparend, mit minimiertem Querschnitt.

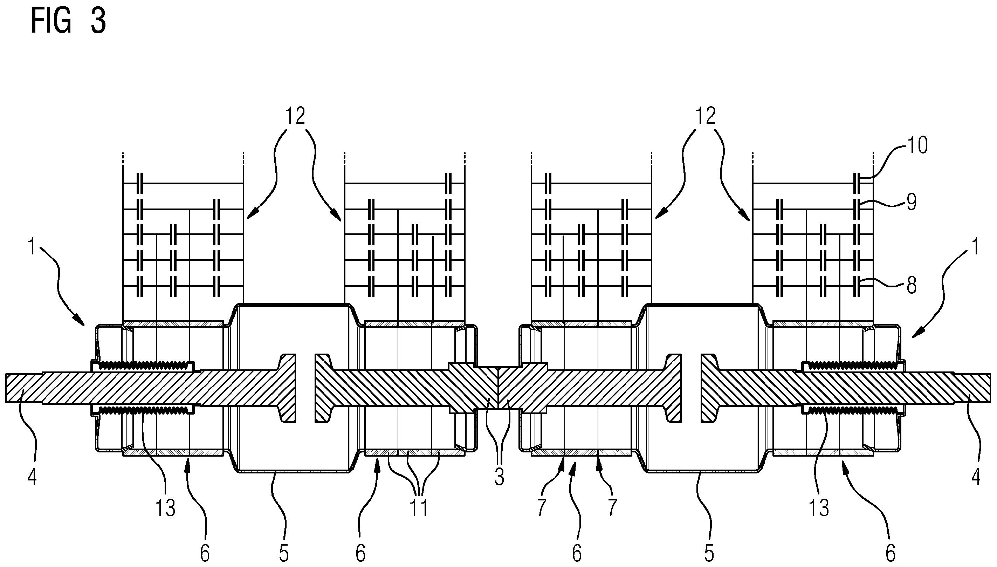

In Figur 3 sind zwei erfindungsgemäße Vakuumschaltröhren 1 der Figuren 1 und/oder 2 in Reihe hintereinander angeordnet dargestellt, gemäß einer erfindungsgemäßen Anordnung 16 von Vakuumschaltröhren 1, mit schematisch dargestellter Verschaltung der Steuerelemente 8, 9, 10. Die Verschaltung der Steuerelemente 8, 9, 10, d. h. elektrische Kontaktierung und Verbindung, erfolgt jeweils pro Vakuumschaltröhre 1 zwischen den Kontakten 3, 4 über die Dampfschirme 7 und den Hauptschirm 5. Dabei sind unterschiedliche Schaltungen möglich, entsprechend der gewünschten, vordefinierten Spannungsverteilung bzw. Absteuerung über die Vakuumschaltröhren 1. Es können symmetrische Schaltungen insbesondere zur gleichmäßigen Spannungsverteilung über die Vakuumschaltröhren 1 verwendet werden, oder über die Keramiksegmente 6 hinweg verschiedene Schaltungen verwendet werden, was der Einfachheit halber in den Figuren nicht dargestellt ist. Beispielhaft ist in Figur 3 eine Reihenschaltung von zwei Vakuumschaltröhren 1, mit insgesamt vier Keramiksegmenten 6 dargestellt, welche jeweils durch zwei Dampfschirme 7 in drei Keramiksegment-Elemente 11 unterteilt sind.

Im Ausführungsbeispiel der Figur 3 schematisch dargestellt, sind die zwei Vakuumschaltröhren 1 jeweils mit gleichen Steuerelement 8, 9, 10 -Schaltungen ausgestattet, wobei je Vakuumschaltröhre 1 zwei symmetrische, am Hauptschirm 5 gespiegelte Teilschaltungen, über die zwei Keramiksegmente 6 geschaltet, verwendet werden. Dabei sind je Keramiksegment 6 drei mal drei kurze Steuerelemente 8 in Reihe geschaltet, wobei die drei in Reihe geschalteten Steuerelemente 8 jeweils parallel den anderen zwei mal drei Steuerelementen 8 geschaltet sind, wobei über die Dampfschirme 7 zwischen den Kontakten 3 bzw. 4 und dem Hauptschirm 5 jeweils alle Steuerelemente 8 elektrisch verbunden sind. Dazu ist parallel ein langes Steuerelement 10 geschaltet. Des Weiteren ist ein mittellanges 9 und ein kurzes 8 Steuerelement, welche in Reihe geschaltet sind, dem langen Steuerelement 10 parallel geschaltet. Das kurze Steuerelement 8 ist parallel jeweils zu einem der drei in Reihe geschalteten Steuerelemente 8 geschaltet. Die Schaltung ist beispielhaft in Figur 3 dargestellt, und kann entsprechend einer gewünschten Spannungsverteilung auch anders aufgebaut sein. In Figur 3 sind nur Kapazitäten in Form von Kondensatoren als Steuerelemente 8, 9, 10 verwendet. Zusätzlich oder alternativ können auch Ohm'sche Widerstände verwendet werden.

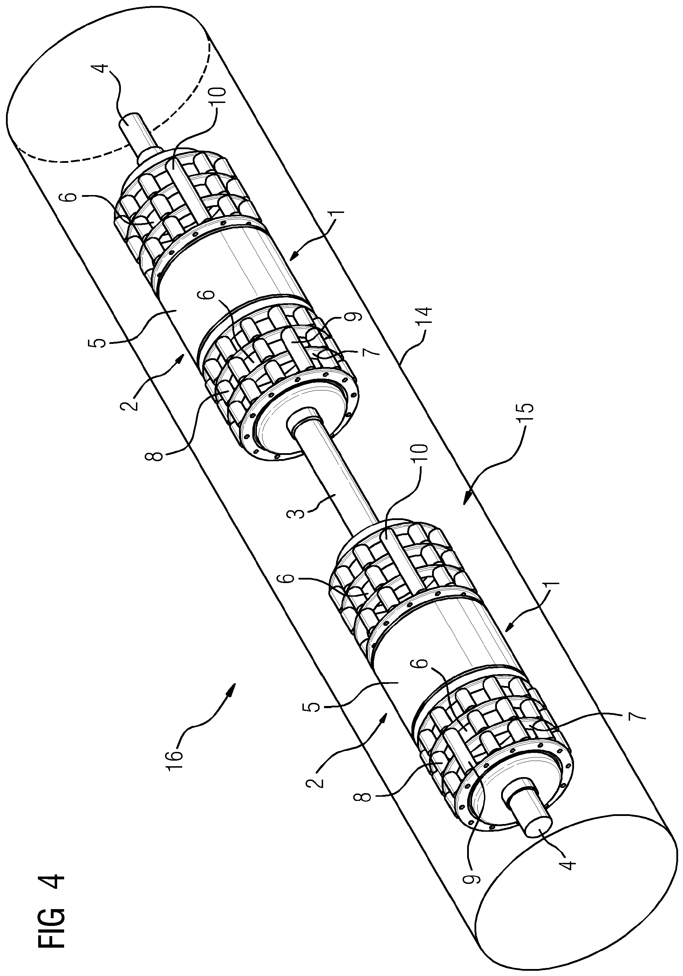

In Figur 4 ist eine erfindungsgemäße Anordnung 16 von zwei in Reihe geschalteten Vakuumschaltröhren 1 analog Figur 3 dargestellt, wobei die Vakuumschaltröhren 1 von einem Gehäuse 14 umfasst sind bzw. in einem Gehäuse 14 angeordnet sind. Das Gehäuse 14 ist z. B. ein gasdicht verschlossener Metalltank- und/oder ein gasdicht verschlossenes Isolator-Gehäuse. Metalltank-Gehäuse sind z. B. aus Stahl oder Aluminium, insbesondere auf Erdpotential nach Art eines Dead-Tank. Isolator-Gehäuse sind z. B. aus Keramik, Silikon und/oder Verbundwerkstoffen, insbesondere mit einer gerippten äußeren Oberfläche zur Verlängerung von Kriechstrompfaden. Das Gehäuse 14 ist z. B. mit Clean Air als Isoliergas 15 befüllt, welches klimaneutral ist. Alternativ oder zusätzlich können Isoliergase 15 wie z. B. SF₆ und/oder CO₂ verwendet werden.

Die Vakuumschaltröhren 1 sind, wie in der Figur 4 dargestellt ist, über die festen Kontakte 3 miteinander verbunden, insbesondere direkt verbunden. Alternativ können die Vakuumschaltröhren 1 über die beweglichen Kontakte 4 miteinander verbunden sein, insbesondere elektrisch und mechanisch, oder eine Verbindung erfolgt über ein bewegliches 4 und ein festes 3 Kontaktstück. Ein Antrieb, z. B. ein Motor- und/oder Federspeicherantrieb, ist z. B. vorgesehen, um die beweglichen Kontakte 4 beim elektrischen Schalten anzutreiben, was der Einfachheit halber in den Figuren nicht dargestellt ist.

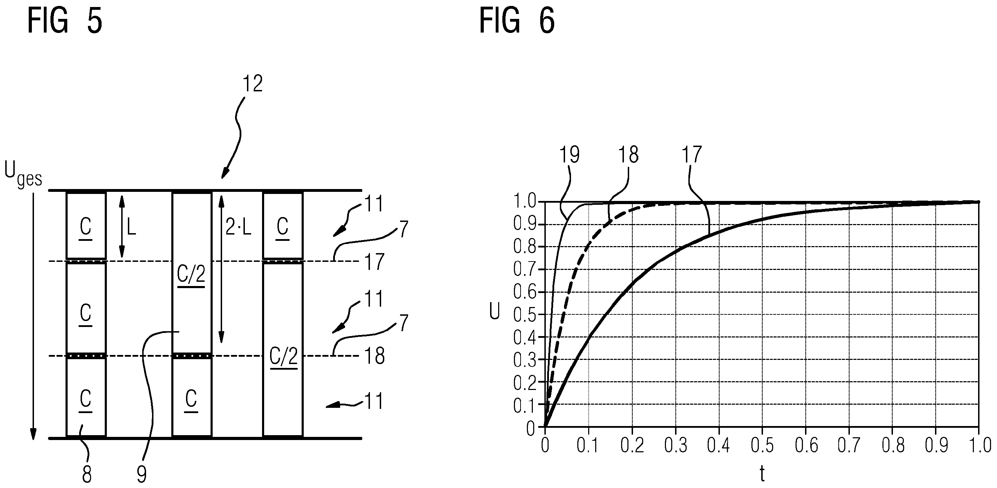

In Figur 5 ist beispielhaft eine schematische Darstellung einer Spannungsaufteilung und Anordnung bzw. Verschaltung von Kondensatoren als Steuerelemente 8, 9, 10 gezeigt, eines Keramiksegments 6 einer Vakuumschaltröhre 1 analog den Figuren 1 und 2. Dabei ist das Keramiksegment 6 in drei Keramiksegment-Elemente 11 durch zwei Dampfschirme 7 unterteilt. Im Unterschied zu den Schaltungen der Figuren 1 und 2 sind in Figur 5 der Einfachheit halber drei kurze Steuerelemente 8 in Reihe geschaltet, mit einem mittellangen Steuerelement 9 parallel zu zwei der drei in Reihe geschalteten Steuerelementen 8 geschaltet, und einem kurzen Steuerelement 8 parallel dem dritten der drei in Reihe geschalteten Steuerelemente 8 geschaltet. Dazu ist in umgekehrter Reihenfolge ein kurzes Steuerelement 8 parallel dem ersten der drei in Reihe geschalteten Steuerelemente 8 geschaltet, und ein mittellanges Steuerelement 9 parallel den zwei anderen der drei in Reihe geschalteten Steuerelemente 8 geschaltet, wobei das mittlere Steuerelement 9 dem kurzen Steuerelement 8, parallel dem ersten der drei in Reihe geschalteten Steuerelementen 8 geschaltet, in Reihe geschaltet ist.

Über dem Keramiksegment 6, welches durch die zwei Dampfschirme 7 in drei Keramiksegment-Elemente 11 unterteilt ist, liegt ein elektrisches Potential bzw. eine elektrische Gesamt-Spannung U_{ges} an bzw. fällt darüber ab, die im Weiteren als Kammerpotential bezeichnet wird, welche durch die Verschaltung mit Hilfe der Steuerelemente 8, 9 an den Dampfschirmen 8 ein erstes Dampfschirmpotential 17 und ein zweites Dampfschirmpotential 18 erzeugt.

In Figur 6 sind jeweils normierte Potentialverläufe U, abhängig von der Zeit t, für ein Kammerpotential 19, ein erstes 17 und ein zweites 18 Dampfschirmpotential gezeigt, für ein Keramiksegment 6 verschaltet gemäß Figur 5. Das Kammerpotential 19 zeigt den stärksten Anstieg, bevor das Potential 19 in Sättigung geht, und das Dampfschirmpotential 17 den geringsten Anstieg. Der Potentialverlauf des Dampfschirmpotentials 18 liegt dazwischen. Beide Dampfschirmpotentialverläufe 17 und 18 liegen unterhalb des Kammerpotentials 19, womit eine Spannungsüberhöhung an den Dampfschirmen 7 verhindert werden kann. Spannungsüberhöhungen reduzieren die Langlebigkeit der Vakuumschaltröhre, können zu Zerstörungen führen und Störungen beim Schalten. Eine in den Figuren 1 bis 5 dargestellte Verschaltung ermöglicht eine zuverlässige, langzeitstabile Funktion der Vakuumschaltröhren 1 und/der Anordnungen mit Vakuumschaltröhren 16, ohne Störungen, was Kosten, insbesondere Wartungskosten und Wiederherstellungskosten sowie Zeit spart. Die zuvor beschriebenen Ausführungsbeispiele können untereinander kombiniert werden und/oder können mit dem Stand der Technik kombiniert werden. So können z. B. mehr als zwei Vakuumschaltröhren 1 miteinander verschaltet werden, insbesondere in Reihe und/oder parallel. Die Steuerelemente 8, 9, 10 können unterschiedliche Formen aufweisen, insbesondere Kreiszylinderförmige, Zylinderförmige mit elliptischer Grund- und Deckfläche, Rechteckige, Quadratische, und/oder Formen mit konvexer und/oder konkaver Oberfläche. Eine Befestigung der Steuerelemente 8 erfolgt, z. B. an der Vakuumschaltröhre 1, durch Löten, insbesondere an Metallteilen wie z. B. Kupferteilen, durch Schrauben, durch Kleben, durch Klemmen und/oder durch Schweißen. Die Steuerelemente 8, 9, 10 sind z. B. direkt kraftschlüssig an der Hülle 2, insbesondere an Keramiksegmenten 6, angeordnet, insbesondere elektrisch isoliert vom Keramiksegment 6 durch einen Isolierlack und/oder eine Oberflächenbehandlung. Und/oder Steuerelemente 8, 9, 10 sind z. B. direkt an der Hülle 2, insbesondere an Keramiksegmenten 6, angeordnet, mit einem geringen Abstand von den Keramiksegmenten 6, insbesondere zwischen den Dampfschirmen 7, Hauptschirm 5 und/oder Kontakten 3, 4, z. B. verschraubt, geklemmt, gelötete, geklebt und/oder geschweißt. Ein geringer Abstand liegt z. B. im Bereich von wenigen Millimetern bis hin zu einem Zentimeter.

Die Steuerelemente 8, 9, 10 sind an der Hülle 2 der Vakuumschaltröhre 1 bzw. Vakuumschaltröhren 1 als diskrete Bauteile beabstandet voneinander angeordnet. Dabei erfolgt eine Anordnung z. B. ringförmig, entlang einem z. B. kreisförmigen Querschnitt der Vakuumschaltröhre 1, mit verschiedenen Ringen entlang der Längsachse der Vakuumschaltröhre 1. Benachbarte Steuerelemente 8, 9, 10 in verschiedenen Ringen sind z. B. auf geraden Linien angeordnet, oder versetzt zueinander. Alternativ kann eine Anordnung der Steuerelemente 8, 9, 10 z. B. auf einer Schraubenlinie bzw. Spirale erfolgen. Weiter Anordnungen und/oder Kombinationen von Anordnungen sind ebenfalls möglich.

Mit der zuvor beschriebenen erfindungsgemäßen Vakuumschaltröhre 1 und der Anordnung 16 von erfindungsgemäßen Vakuumschaltröhren 1 in Reihe hintereinander, insbesondere in Reihe verschaltet, ist über die Steuerelemente 8 ein Absteuern von Spannungen über die Vakuumschaltröhren 1 möglich. Spannungen können gleichmäßig oder unterschiedlich, vorbestimmt, über die Wahl der Steuerelemente 8, 9, 10 und deren Verschaltung auf die Vakuumschaltröhren 1 bzw. deren Elemente, wie z. B. verschieden lange Keramiksegmente 6 und/oder Keramiksegment-Elemente 11, aufgeteilt werden. Die Anordnung der Steuerelemente 8, 9, 10 an der Vakuumschaltröhre 1 bzw. den Vakuumschaltröhren 1 ermöglicht einen kompakten, platzsparenden Aufbau, was ein kostengünstiges, räumlich minimiertes Gehäuse 14 ermöglicht, und insbesondere den Einsatz von Isoliergasen, wie z. B. Clean Air, mit geringen bzw. minimierten und/oder Standard-Abmessungen von Gehäusen ermöglicht. Die Absteuerung der Spannung über die Vakuumschaltröhre 1 bzw. Vakuumschaltröhren 1, mit Hilfe der Steuerelemente 8, 9, 10 und deren Verschaltung, verhindert bei geöffnetem Kontakt bzw. beabstandeten Kontakten 3, 4 voneinander, Überspannungen und eine Beschädigung bis hin zur Zerstörung der Vakuumschaltröhre 1 und/oder Anordnung 16 mit Vakuumschaltröhren 1. Beliebige, gewünschte Spannungsverteilungen sind durch unterschiedliche Schaltungen unter Verwendung von Kondensatoren und/oder Widerständen unterschiedlicher Größe, nämlich unterschiedlicher Länge und/oder Breite, möglich.

### Bezugszeichen:

- 1: Vakuumschaltröhre
- 2: Hülle
- 3: Fester Kontakt
- 4: Beweglicher Kontakt
- 5: Hauptschirm
- 6: Keramiksegment
- 7: Dampfschirm
- 8: Kurzes Steuerelement
- 9: Mittellanges Steuerelement
- 10: Langes Steuerelement
- 11: Keramiksegment-Element
- 12: Schaltbild der Steuerelemente
- 13: Faltenbalg
- 14: Gehäuse
- 15: Isoliergas
- 16: Anordnung mit Vakuumschaltröhren
- 17: Erstes Dampfschirmpotential
- 18: Zweites Dampfschirmpotential
- 19: Kammerpotential
- t: Zeit
- U: Elektrisches Potential

## Patentansprüche

1. Vakuumschaltröhre (1) zum Schalten von Spannungen, mit wenigstens einer Hülle (2) und mit wenigstens einem festen Kontakt (3) sowie mit wenigstens einem beweglichen Kontakt (4), wobei Steuerelemente (8, 9, 10) umfasst sind, wobei die Steuerelemente (8, 9, 10) unterschiedliche Längen und/oder unterschiedliche Breiten aufweisen,
**dadurch gekennzeichnet, dass** die Steuerelemente (8, 9, 10) als diskrete Bauteile an der Hülle (2) der Vakuumschaltröhre (1) beabstandet voneinander angeordnet sind, und dass die Steuerelemente (8, 9, 10) aus Kondensatoren unterschiedlicher Breite und/ oder Länge mit unterschiedlichen Kapazitätswerten und/oder aus Widerständen unterschiedlicher Breite und/oder Länge mit unterschiedlichen ohmschen Widerstandswerten bestehen.

2. Vakuumschaltröhre (1) nach Anspruch 1, **dadurch gekennzeichnet, dass** alle Steuerelemente (8, 9, 10) aus Kondensatoren und/oder Widerständen bestehen, insbesondere aus Kondensatoren mit unterschiedlicher Breite und/oder Länge und/oder aus Widerständen mit unterschiedlicher Breite und/oder Länge, insbesondere aus Kondensatoren mit unterschiedlichen Kapazitäts-Werten und/oder aus Widerständen mit unterschiedlichen Ohm'schen Widerstands-Werten.

3. Vakuumschaltröhre (1) nach einem der vorhergehenden Ansprüche, **dadurch gekennzeichnet, dass** die Vakuumschaltröhre (1) eine Hülle (2) mit wenigstens einem Hauptschirm (5) und mit wenigstens zwei Keramiksegmenten (6) umfasst, wobei der wenigstens eine Hauptschirm (5) zwischen den wenigstens zwei Keramiksegmenten (6) angeordnet ist, und/oder dass die Steuerelemente (8, 9, 10) an der Hülle (2) der Vakuumschaltröhre (1) angeordnet sind, insbesondere an den Keramiksegmenten (6) der Hülle (2), insbesondere in unmittelbarer Umgebung und/oder direkt stoffschlüssig anliegend an den Keramiksegmenten (6).

4. Vakuumschaltröhre (1) nach Anspruch 3, **dadurch gekennzeichnet, dass** die Keramiksegmente (6) insbesondere durch Dampfschirme (7), welche insbesondere vom Inneren der Vakuumschaltröhre (1) in den Außenbereich der Vakuumschaltröhre (1) ragen, in Keramiksegment-Elemente (11) unterteilt sind, und/oder dass wenigstens ein Steuerelement (9, 10) mehr als ein Keramiksegment-Element (11) längenmäßig überragt und/oder im Wesentlichen die Länge von zwei oder mehr Keramiksegment-Elementen (11) aufweist.

5. Vakuumschaltröhre (1) nach einem der vorhergehenden Ansprüche, **dadurch gekennzeichnet, dass** wenigstens zwei Steuerelemente (8, 9, 10) umfasst sind, insbesondere drei oder mehr Steuerelemente (8, 9, 10), welche kreisförmig am Umfang der wenigstens einen Vakuumschaltröhre (1) angeordnet sind, insbesondere kreisförmig am Umfang wenigstens eines Keramiksegment-Elements (11).

6. Vakuumschaltröhre (1) nach Anspruch 5, **dadurch gekennzeichnet, dass** Steuerelemente (8, 9, 10) kreisförmig am Umfang der wenigstens einen Vakuumschaltröhre (1) angeordnet sind, mit jeweils Steuerelementen (8, 9, 10) an verschiedenen Keramiksegment-Elementen (11), wobei einzelne Steuerelemente (8) an genau einem Keramiksegment-Element (11) angeordnet sind, und/oder einzelne Steuerelemente (9) an zwei, und/oder einzelne Steuerelemente (10) an mehr als zwei Keramiksegment-Elementen (11) angeordnet sind.

7. Vakuumschaltröhre (1) nach einem der vorhergehenden Ansprüche, **dadurch gekennzeichnet, dass** Steuerelemente (8, 9, 10) zwischen dem wenigstens einem festen Kontakt (3) und dem wenigstens einem beweglichen Kontakt (4) elektrisch und/oder räumlich angeordnet sind, insbesondere zwischen dem wenigstens einem festen Kontakt (3) und einem Dampfschirm (7), und/oder zwischen wenigstens einem festen Kontakt (3) und einem Hauptschirm (5), und/oder zwischen einem Dampfschirm (7) und einem Hauptschirm (5), und/oder zwischen zwei Dampfschirmen (7), und/oder zwischen dem wenigstens einem beweglichen Kontakt (4) und einem Dampfschirm (7), und/oder zwischen wenigstens einem beweglichen Kontakt (4) und einem Hauptschirm (5).

8. Vakuumschaltröhre (1) nach einem der vorhergehenden Ansprüche, **dadurch gekennzeichnet, dass** die Steuerelemente (8, 9, 10) eine Gesamtkapazität im Bereich von 10 bis 4000 pF, insbesondere im Bereich 500 bis 4000 pF aufweisen.

9. Vakuumschaltröhre (1) nach einem der vorhergehenden Ansprüche, **dadurch gekennzeichnet, dass** die Vakuumschaltröhre (1) ausgebildet ist, Spannungen im Hochspannungsbereich, insbesondere im Bereich größer oder gleich 52 kV zu schalten.

10. Anordnung mit Vakuumschaltröhren (11) nach einem der vorhergehenden Ansprüche, **dadurch gekennzeichnet, dass** wenigstens zwei, insbesondere mehr als zwei Vakuumschaltröhren (1) elektrisch in Reihe geschaltet sind, insbesondere mit Steuerelementen (8, 9, 10), welche an den wenigstens zwei Vakuumschaltröhren (1) angeordnet sind, und/oder mit Steuerelementen (8, 9, 10) einer Vakuumschaltröhre (1) in Reihe geschaltet mit Steuerelementen (8, 9, 10) einer weiteren Vakuumschaltröhre (1), insbesondere aller Vakuumschaltröhren (1).

11. Anordnung (11) nach Anspruch 10, **dadurch gekennzeichnet, dass** ein Metalltank- und/oder ein Isolator-Gehäuse (14) umfasst ist, in welchem die Vakuumschaltröhren (1) angeordnet sind, insbesondere befüllt mit Clean Air als Isoliergas (15).

12. Verfahren zum Absteuern von Vakuumschaltröhren (1) nach einem der Ansprüche 1 bis 9 und/oder von Anordnungen mit Vakuumschaltröhren (16) nach einem der Ansprüche 10 bis 11, **dadurch gekennzeichnet, dass** ein elektrisches Absteuern mittels Steuerelementen (8, 9, 10) erfolgt, wobei die Steuerelemente (8, 9, 10) unterschiedliche Längen und/oder unterschiedliche Breiten aufweisen, und die Steuerelemente (8, 9, 10) als diskrete Bauteile an der Hülle (2) der Vakuumschaltröhre (1) beabstandet voneinander angeordnet sind, und wobei die Steuerelemente (8, 9, 10) aus Kondensatoren unterschiedlicher Breite und/oder Länge mit unterschiedlichen Kapazitätswerten und/oder aus Widerständen unterschiedlicher Breite und/oder Länge mit unterschiedlichen ohmschen Widerstandswerten bestehen, insbesondere angeordnet in einem Gehäuse (14) mit den Vakuumschaltröhren (1), und/oder mit Steuerelementen (8, 9, 10) unterschiedlicher Vakuumschaltröhren (1), welche in Reihe geschaltet sind.

## Claims

1. A vacuum interrupter (1) for switching voltages, having at least one sleeve (2) and at least one fixed contact (3) and at least one movable contact (4), wherein control elements (8, 9, 10) are comprised, wherein the control elements (8, 9, 10) have different lengths and/or different widths,
**characterised in that** the control elements (8, 9, 10) are arranged as discrete components on the sleeve (2) of the vacuum interrupter (1) spaced apart from one another, and **in that** the control elements (8, 9, 10) consist of capacitors of different width and/or length with different capacitance values and/or of resistors of different width and/or length with different ohmic resistance values.

2. The vacuum interrupter (1) according to claim 1, **characterised in that** all the control elements (8, 9, 10) consist of capacitors and/or resistors, in particular of capacitors of different width and/or length and/or of resistors of different width and/or length, in particular of capacitors with different capacitance values and/or of resistors with different ohmic resistance values.

3. The vacuum interrupter (1) according to any one of the preceding claims, **characterised in that** the vacuum interrupter (1) comprises a sleeve (2) having at least one main shield (5) and having at least two ceramic segments (6), wherein the at least one main shield (5) is arranged between the at least two ceramic segments (6), and/or **in that** the control elements (8, 9, 10) are arranged on the sleeve (2) of the vacuum interrupter (1), in particular on the ceramic segments (6) of the sleeve (2), in particular in immediate vicinity and/or directly firmly bonded on the ceramic segments (6).

4. The vacuum interrupter (1) according to claim 3, **characterised in that** the ceramic segments (6) are subdivided into ceramic segment elements (11), in particular by steam shields (7) which project in particular from the interior of the vacuum interrupter (1) into the exterior of the vacuum interrupter (1), and/or **in that** at least one control element (9, 10) projects beyond more than one ceramic segment element (11) in terms of length and/or has substantially the length of two or more ceramic segment elements (11).

5. The vacuum interrupter (1) according to any one of the preceding claims, **characterised in that** at least two control elements (8, 9, 10) are comprised, in particular three or more control elements (8, 9, 10), which are arranged circularly on the circumference of the at least one vacuum interrupter (1), in particular circularly on the circumference of at least one ceramic segment element (11).

6. The vacuum interrupter (1) according to claim 5, **characterised in that** control elements (8, 9, 10) are arranged circularly on the circumference of the at least one vacuum interrupter (1), each with control elements (8, 9, 10) being arranged on different ceramic segment elements (11), wherein individual control elements (8) are arranged on exactly one ceramic segment element (11), and/or individual control elements (9) are arranged on two and/or individual control elements (10) are arranged on more than two ceramic segment elements (11).

7. The vacuum interrupter (1) according to any one of the preceding claims, **characterised in that** the control elements (8, 9, 10) are arranged electrically and/or spatially between the at least one fixed contact (3) and the at least one movable contact (4), in particular between the at least one fixed contact (3) and a steam shield (7), and/or between at least one fixed contact (3) and a main shield (5), and/or between a steam shield (7) and a main shield (5), and/or between two steam shields (7), and/or between the at least one movable contact (4) and a steam shield (7), and/or between at least one movable contact (4) and a main shield (5).

8. The vacuum interrupter (1) according to any one of the preceding claims, **characterised in that** the control elements (8, 9, 10) have a total capacity in the range of 10 to 4000 pF, in particular in the range of 500 to 4000 pF.

9. The vacuum interrupter (1) according to any one of the preceding claims, **characterised in that** the vacuum interrupter (1) is configured to switch voltages in the high voltage range, in particular in the range greater than or equal to 52 kV.

10. An assembly comprising vacuum interrupters (11) according to any one of the preceding claims, **characterised in that** at least two, in particular more than two, vacuum interrupters (1) are electrically connected in series, in particular having control elements (8, 9, 10) which are arranged on the at least two vacuum interrupters (1), and/or having control elements (8, 9, 10) of a vacuum interrupter (1) connected in series with control elements (8, 9, 10) of a further vacuum interrupter (1), in particular of all vacuum interrupters (1).

11. The assembly (11) according to claim 10, **characterised in that** a metal tank and/or insulator housing (14) is comprised, in which the vacuum interrupters (1) are arranged, in particular filled with clean air as an insulating gas (15).

12. A method for distributing a voltage among vacuum interrupters (1) according to any one of claims 1 to 9 and/or assemblies with vacuum interrupters (16) according to any one of claims 10 to 11, **characterised in that** electrically distributing a voltage is performed by means of control elements (8, 9, 10), wherein the control elements (8, 9, 10) have different lengths and/or different widths, and **in that** the control elements (8, 9, 10) are arranged as discrete components on the sleeve (2) of the vacuum interrupter (1) spaced apart from one another, and wherein the control elements (8, 9, 10) consist of capacitors of different width and/or length with different capacitance values and/or of resistors of different width and/or length with different ohmic resistance values, in particular arranged in a housing (14) with the vacuum interrupters (1), and/or with control elements (8, 9, 10) of different vacuum interrupters (1) which are connected in series.

## Revendications

1. Interrupteur à vide (1) pour commuter des tensions, comprenant au moins une enveloppe (2) et au moins un contact fixe (3) ainsi qu'au moins un contact mobile (4), comportant des éléments de commande (8, 9, 10), dans lequel les éléments de commande (8, 9, 10) présentent des longueurs différentes et/ou des largeurs différentes,
**caractérisé en ce que** les éléments de commande (8, 9, 10) sont agencés en tant que composants discrets sur l'enveloppe (2) de l'interrupteur à vide (1) en étant espacés les uns des autres, et **en ce que** les éléments de commande (8, 9, 10) sont constitués de condensateurs de largeurs et/ou de longueurs différentes présentant des valeurs de capacité différentes et/ou de résistances de largeurs et/ou de longueurs différentes présentant des valeurs de résistance ohmique différentes.

2. Interrupteur à vide (1) selon la revendication 1, **caractérisé en ce que** tous les éléments de commande (8, 9, 10) sont constitués de condensateurs et/ou de résistances, en particulier de condensateurs de largeurs et/ou de longueurs différentes et/ou de résistances de largeurs et/ou de longueurs différentes, en particulier de condensateurs présentant des valeurs de capacité différentes et/ou de résistances présentant des valeurs de résistance ohmique différentes.

3. Interrupteur à vide (1) selon l'une quelconque des revendications précédentes, **caractérisé en ce que** l'interrupteur à vide (1) comprend une enveloppe (2) comportant au moins un écran principal (5) et comportant au moins deux segments en céramique (6), dans lequel ledit au moins un écran principal (5) est agencé entre lesdits au moins deux segments en céramique (6), et/ou **en ce que** les éléments de commande (8, 9, 10) sont agencés sur l'enveloppe (2) de l'interrupteur à vide (1), en particulier sur les segments en céramique (6) de l'enveloppe (2), en particulier à proximité immédiate des segments en céramique (6) et/ou en appui direct par liaison de matière contre ceux-ci.

4. Interrupteur à vide (1) selon la revendication 3, **caractérisé en ce que** les segments en céramique (6) sont subdivisés en éléments de segment en céramique (11), en particulier par des écrans pare-vapeur (7), lesquels font saillie en particulier depuis l'intérieur de l'interrupteur à vide (1) jusque dans la zone extérieure de l'interrupteur à vide (1), et/ou **en ce qu'**au moins un élément de commande (9, 10) s'étend en longueur au-delà de plus d'un élément de segment en céramique (11) et/ou présente sensiblement la longueur de deux éléments de segment en céramique (11) ou plus.

5. Interrupteur à vide (1) selon l'une quelconque des revendications précédentes, **caractérisé en ce qu'**au moins deux éléments de commande (8, 9, 10) sont prévus, en particulier trois éléments de commande (8, 9, 10) ou plus, lesquels sont agencés de manière circulaire sur la circonférence dudit au moins un interrupteur à vide (1), en particulier de manière circulaire sur la circonférence d'au moins un élément de segment en céramique (11).

6. Interrupteur à vide (1) selon la revendication 5, **caractérisé en ce que** des éléments de commande (8, 9, 10) sont agencés de manière circulaire sur la circonférence dudit au moins un interrupteur à vide (1), avec des éléments de commande respectifs (8, 9, 10) situés sur différents éléments de segment en céramique (11), dans lequel des éléments de commande individuels (8) sont agencés sur exactement un élément de segment en céramique (11), et/ou des éléments de commande individuels (9) sont agencés sur deux éléments de segment en céramique, et/ou des éléments de commande individuels (10) sont agencés sur plus de deux éléments de segment en céramique (11).

7. Interrupteur à vide (1) selon l'une quelconque des revendications précédentes, **caractérisé en ce que** des éléments de commande (8, 9, 10) sont agencés électriquement et/ou spatialement entre ledit au moins un contact fixe (3) et ledit au moins un contact mobile (4), en particulier entre ledit au moins un contact fixe (3) et un écran pare-vapeur (7), et/ou entre au moins un contact fixe (3) et un écran principal (5), et/ou entre un écran pare-vapeur (7) et un écran principal (5), et/ou entre deux écrans pare-vapeur (7), et/ou entre ledit au moins un contact mobile (4) et un écran pare-vapeur (7), et/ou entre au moins un contact mobile (4) et un écran principal (5).

8. Interrupteur à vide (1) selon l'une quelconque des revendications précédentes, **caractérisé en ce que** les éléments de commande (8, 9, 10) présentent une capacité totale comprise dans la plage de 10 à 4000 pF, en particulier dans la plage de 500 à 4000 pF.

9. Interrupteur à vide (1) selon l'une quelconque des revendications précédentes, **caractérisé en ce que** l'interrupteur à vide (1) est conçu pour commuter des tensions dans la plage de la haute tension, en particulier dans la plage supérieure ou égale à 52 kV.

10. Ensemble comprenant des interrupteurs à vide (11) selon l'une quelconque des revendications précédentes, **caractérisé en ce qu'**au moins deux, en particulier plus de deux, interrupteurs à vide (1) sont montés électriquement en série, en particulier avec des éléments de commande (8, 9, 10) qui sont agencés sur lesdits au moins deux interrupteurs à vide (1), et/ou avec des éléments de commande (8, 9, 10) d'un interrupteur à vide (1) montés en série avec des éléments de commande (8, 9, 10) d'un autre interrupteur à vide (1), en particulier de tous les interrupteurs à vide (1).

11. Ensemble (11) selon la revendication 10, **caractérisé en ce qu'**il est prévu une cuve métallique et/ou un boîtier isolant (14), dans lequel les interrupteurs à vide (1) sont agencés, celui-ci étant en particulier rempli d'air pur en tant que gaz isolant (15).

12. Procédé de distribution de tension pour des interrupteurs à vide (1) selon l'une quelconque des revendications 1 à 9 et/ou pour des ensembles comprenant des interrupteurs à vide (16) selon l'une quelconque des revendications 10 à 11, **caractérisé en ce qu'**une distribution électrique de tension est effectuée au moyen d'éléments de commande (8, 9, 10), dans lequel les éléments de commande (8, 9, 10) présentent des longueurs différentes et/ou des largeurs différentes, et les éléments de commande (8, 9, 10) sont agencés en tant que composants discrets sur l'enveloppe (2) de l'interrupteur à vide (1) en étant espacés les uns des autres, et dans lequel les éléments de commande (8, 9, 10) sont constitués de condensateurs de largeurs et/ou de longueurs différentes présentant des valeurs de capacité différentes et/ou de résistances de largeurs et/ou de longueurs différentes présentant des valeurs de résistance ohmique différentes, en particulier agencés dans un boîtier (14) avec les interrupteurs à vide (1), et/ou avec des éléments de commande (8, 9, 10) de différents interrupteurs à vide (1) qui sont montés en série.
